# FASCICULE DE BREVET EUROPEEN

(11) **EP 4 259 914 B1**
(45) Date de publication et mention de la délivrance du brevet: **27.05.2026**
(21) Numéro de dépôt: 21848004.4
(22) Date de dépôt: 13.12.2021
(51) Int. Cl.: F02C 7/042, F02C 7/057, F02C 7/28

(54) **ENSEMBLE PROPULSIF POUR UN AERONEF COMPRENANT UN SYSTEME D'ETANCHEITE ENTRE DEUX PARTIES D'ENTREE D'AIR**
ANTRIEBSEINHEIT FÜR EIN FLUGZEUG MIT EINEM SYSTEM ZUR ABDICHTUNG ZWISCHEN ZWEI LUFTEINLASSTEILEN
PROPULSION UNIT FOR AN AIRCRAFT COMPRISING A SYSTEM FOR SEALING BETWEEN TWO AIR INTAKE PARTS

(30) Priorité: 14.12.2020 FR 2013170
(43) Date de publication de la demande: 18.10.2023
(73) Titulaire: Safran Nacelles, 76700 Gonfreville-l'Orcher (FR)
(72) Inventeur: KIOUA, Hazem, 77550 Moissy-Cramayel (FR)
(74) Mandataire: Gevers & Orès
(86) Numéro de dépôt international: PCT/FR2021/052292
(87) Numéro de publication internationale: WO 2022/129756

(56) Documents cités:
- US-A1- 2018 283 276

## Description

### Domaine technique de l'invention

La présente invention concerne un ensemble propulsif pour un aéronef.

### Arrière-plan technique

Un ensemble propulsif pour aéronef comprend classiquement un générateur de gaz et une entrée d'air.

Un générateur de gaz comporte, d'amont en aval, par référence à l'écoulement des gaz, au moins un compresseur, une chambre annulaire de combustion et au moins une turbine. Le générateur de gaz est par exemple une turbomachine ou un turboréacteur.

L'entrée d'air ou « inlet » est située en amont du générateur de gaz et assure la canalisation du flux d'air entrant dans le générateur de gaz. Dans le cas d'une turbomachine ou d'un turboréacteur à soufflante, l'entrée d'air est formée par une nacelle entourant la soufflante située en amont du générateur de gaz.

Un ensemble propulsif peut être installé en position latérale ou en position centrale sur un aéronef. En position latérale, l'ensemble propulsif se situe sous une voilure ou à l'arrière du fuselage de l'aéronef. En position centrale, l'ensemble propulsif se situe à l'arrière dans le fuselage de l'aéronef.

Le débit d'air requis par l'ensemble propulsif dépend principalement du régime moteur et de la vitesse de l'avion. En plus, l'air doit arriver au moteur à une vitesse subsonique et à un flux laminaire.

Dans le cas des avions opérant dans les domaines subsonique et supersonique, l'une des techniques utilisées pour contrôler le débit d'air vers le moteur dans tous les domaines de vol est d'utiliser une entrée d'air à géométrie variable, variant selon l'utilisation de l'avion et son domaine de vitesse. Par exemple, certains avions de chasse sont conçus avec des caractéristiques aérodynamiques devant l'entrée d'air pour réduire la vitesse de l'air à l'entrée (rampe, splitter, section rectangulaire inclinée, etc..).

Cependant, la plupart des avions supersoniques utilisent des entrées d'air à géométrie variable. La variation de la section se fait soit via des rampes mobiles (portes pivotantes) qui laissent passer plus ou moins d'air ou via un noyau central translatant (dans le cas des sections circulaires) appelé « spike ». Cependant, ces solutions sont complexes et impliquent une masse importante.

Une autre solution consiste à faire varier la section d'entrée d'air par translation de la partie amont de l'entrée d'air, également appelée entrée d'air mobile. L'entrée d'air mobile est ainsi configurée pour passer d'une position avancée dans laquelle l'entrée d'air mobile se trouve écartée du reste de l'entrée d'air fixe et dans laquelle un passage d'entrée d'air dans l'ensemble propulsif est créé entre l'entrée d'air mobile et l'entrée d'air fixe, et une position reculée dans laquelle l'entrée d'air mobile se trouve collée ou emboitée au reste de l'entrée d'air fixe.

Dans cette solution la forme du bord aval de l'entrée d'air mobile peut se présenter sous la forme de « S inversé » ou sous la forme de « C » selon un plan de coupe axial. Or, la forme de « S inversé » est favorable en position avancée car elle propose une forme aérodynamique permettant un bon écoulement laminaire de l'air entrant dans l'ensemble propulsif par le passage ouvert par l'entrée d'air mobile mais est défavorable en position reculée. En effet, la forme en « S inversé » ne permet pas d'obtenir une ligne externe lisse de l'entrée d'air en position reculée. Cette déformation de la ligne externe entraîne alors des pertes dans l'écoulement de l'air.

En outre, la forme en « C » est favorable en position reculée car la ligne externe de l'entrée d'air peut cette fois être lisse, mais est défavorable en position avancée. En effet, la forme en « C » ne présente pas une forme aérodynamique optimisée à l'aval de l'entrée d'air mobile et ne permet pas un bon écoulement laminaire de l'air entrant dans l'ensemble propulsif par le passage ouvert par l'entrée d'air mobile.

Un joint dit « gonflable » peut être utilisé au niveau du bord aval de l'entrée d'air fixe. Le joint doit alors présenter une forme aérodynamique en position avancée et une forme rétractée en position reculée. Il est connu pour cela un joint présentant au moins une chambre creuse dont le volume peut être contrôlé par l'intermédiaire d'un système de gestion configuré pour injecter de l'air ou du gaz à l'intérieur de la chambre, comme décrit dans le document US-A1-2018/283276. La quantité d'air injectée par le système de gestion dans le joint permet de passer de la forme rétractée à la forme déployée selon si l'entrée d'air mobile se trouve dans la position avancée ou reculée, c'est-à-dire en fonction du régime moteur. Cependant, le système de gestion permettant de régler la quantité d'air injecté dans la chambre du joint est complexe et coûteux à réaliser.

La présente invention propose une solution à au moins une partie des problèmes évoqués ci-dessus.

### Résumé de l'invention

L'invention concerne un ensemble propulsif pour un aéronef, cet ensemble propulsif comportant :
- un générateur de gaz présentant un axe longitudinal et comportant au moins un compresseur, une chambre de combustion et au moins une turbine agencés les uns derrière les autres le long dudit axe, et
- une entrée d'air de forme générale tubulaire disposée en amont du générateur de gaz par référence à l'écoulement des gaz en fonctionnement, cette entrée d'air comportant une lèvre annulaire amont qui est mobile en translation axiale le long dudit axe depuis une position reculée dans laquelle elle comprend un bord aval accolé à un bord amont du reste de l'entrée d'air, et une position avancée dans laquelle son bord aval est espacé du bord amont du reste de l'entrée d'air, et
- un système d'étanchéité de forme générale annulaire qui est porté par la lèvre, au niveau de son bord aval, et qui est configuré pour adopter, dans ladite position reculée, un état restreint dans lequel il assure une étanchéité entre le bord aval de la lèvre et le bord amont du reste de l'entrée d'air, et un état déployé dans lequel il définit au niveau dudit bord aval un profil aérodynamique d'écoulement d'air à l'intérieur du générateur de gaz,
caractérisé en ce que le système d'étanchéité comprend :
- une enveloppe annulaire réalisée dans un premier matériau et s'étendant autour de l'axe et au niveau du bord aval de la lèvre, cette enveloppe comportant une surface annulaire aval configurée pour venir en appui sur le bord amont du reste de l'entrée d'air et pour définir ledit profil aérodynamique, et
- au moins un organe réalisé dans un second matériau différent du premier matériau et élastiquement déformable, cet organe situé au niveau du bord aval de la lèvre et configuré pour être déformé élastiquement par compression lorsque la lèvre est dans sa position reculée et pour exercer une force de rappel élastique sur l'enveloppe lorsque la lèvre passe de sa position reculée à sa position avancée, de façon à ce que le système d'étanchéité adopte l'état déployé précité de manière autonome.

L'invention propose ainsi un système d'étanchéité capable de passer de sa position rétractée à sa position déployée de manière autonome, notamment par retour élastique naturel.

En position reculée, le bord aval de la lèvre annulaire mobile s'emboite dans le bord amont du reste de l'entrée d'air, le système d'étanchéité est alors comprimé, permettant ainsi de conserver une forme aérodynamique favorable, tout en minimisant les pertes.

En position avancée, le système d'étanchéité est libéré et passe dans son état déployé de manière autonome, notamment grâce à la force de rappel élastique exercée par l'organe sur l'enveloppe, donnant ainsi une forme aérodynamique favorable à la surface annulaire aval de l'enveloppe et permettant ainsi un bon écoulement d'air entrant dans l'ensemble propulsif par le passage libéré par l'entrée d'air mobile.

Le rappel élastique de l'enveloppe se faisant de manière autonome, l'invention permet ainsi de se passer d'un système de gestion de la forme du système d'étanchéité complexe et couteux.

L'ensemble propulsif selon l'invention peut comprendre une ou plusieurs des caractéristiques suivantes, prises isolément les unes des autres ou en combinaison les unes avec les autres :
- ledit premier matériau est un matériau élastiquement déformable ou un tissu technique ; dans la présente demande, on entend par un tissu technique, un tissu ayant des propriétés techniques (et en particulier mécaniques) prédéterminées,
- l'enveloppe a en section axiale une forme générale en L ou C et comprend au moins un rebord cylindrique de fixation ou de liaison au bord aval de la lèvre,
- l'organe est choisi parmi :
   - une lèvre annulaire en matériau élastiquement déformable,
   - un joint annulaire en matériau élastiquement déformable, ce joint comportant une cavité annulaire interne, et
   - un ressort, par exemple métallique,
- il comprend plusieurs ressorts répartis autour de l'axe sur le bord aval de la lèvre,
- l'organe est logé dans un espace annulaire défini entre l'enveloppe et le bord aval de la lèvre,
- l'organe est intimement lié à l'enveloppe et s'étend au moins en partie dans un prolongement de celle-ci,
- au moins un des éléments choisit parmi l'enveloppe et l'organe est fixé par au moins une agrafe, une pince, ou par couture au bord aval de la lèvre,
- l'enveloppe est reliée par une multitude de fils au bord aval de la lèvre, ces fils étant destinés à être tendus lorsque l'enveloppe est dans sa position déployée,
- l'espace est relié à l'atmosphère par au moins une canalisation de pressurisation,
- l'organe a en section axiale une forme générale en L, C, W, V, S, K ou O, et
- ladite entrée d'air est disposée coaxialement en amont du générateur de gaz.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue très schématique d'un ensemble propulsif d'un aéronef ;
[Fig.2a-2b] les figures 2a et 2b sont des représentations schématiques partielles en coupe axiale d'une entrée d'air en position reculée (figure 2a) et en position avancée (2b) ;
[Fig.3] la figure 3 est une représentation schématique en coupe axiale d'un système d'étanchéité sur un bord aval d'une lèvre annulaire mobile de l'entrée d'air ;
[Fig.4a-4c] les figures 4a, 4b, 4c sont des représentations schématiques en coupe axiale de différentes variantes de réalisation du système d'étanchéité selon l'invention ;
[Fig.4d-4i] les figures 4d, 4e, 4f, 4g, 4h, 4i sont des représentations schématiques en coupe axiale de différentes variantes de réalisation du système d'étanchéité selon l'invention ;
[Fig.5a-5e] la figure 5a est une représentation schématique en coupe radiale d'une partie de la lèvre annulaire mobile de l'entrée d'air avec utilisation de ressorts et les figures 5b, 5c, 5d, 5e sont des représentations schématiques de différentes variantes du système d'étanchéité selon l'invention comprenant des ressorts en coupe axiale selon l'axe de coupe A-A (5b, 5d) et selon l'axe de coupe B-B (5c, 5e) de la figure 5a ;
[Fig.5f-5g] les figures 5f, 5g sont des représentations schématiques d'autres variantes du système d'étanchéité selon l'invention comprenant des ressorts en coupe axiale selon l'axe de coupe A-A (5f) et selon l'axe de coupe B-B (5g) de la figure 5a ;
[Fig.6a-6b] les figures 6a, 6b sont des représentations schématiques en coupe axiale de différentes variantes du système d'étanchéité selon l'invention comprenant un moyen de fixation ;
[Fig.7a-7b] les figures 7a et 7b sont des représentations schématiques en coupe axiale de différentes variantes du système d'étanchéité selon l'invention ;
[Fig.8a-8b] les figures 8a, 8b sont des représentations schématiques en coupe axiale d'autres modes de réalisation du système d'étanchéité comprenant un tissu technique
[Fig.8c-8d] les figures 8c, 8d sont des représentations schématiques en coupe axiale d'autres modes de réalisation du système d'étanchéité comprenant un tissu technique ; et
[Fig.9a-9b] les figures 9a et 9b sont des représentations schématiques en coupe axiale de variantes de réalisation du système d'étanchéité de l'invention.

### Description détaillée de l'invention

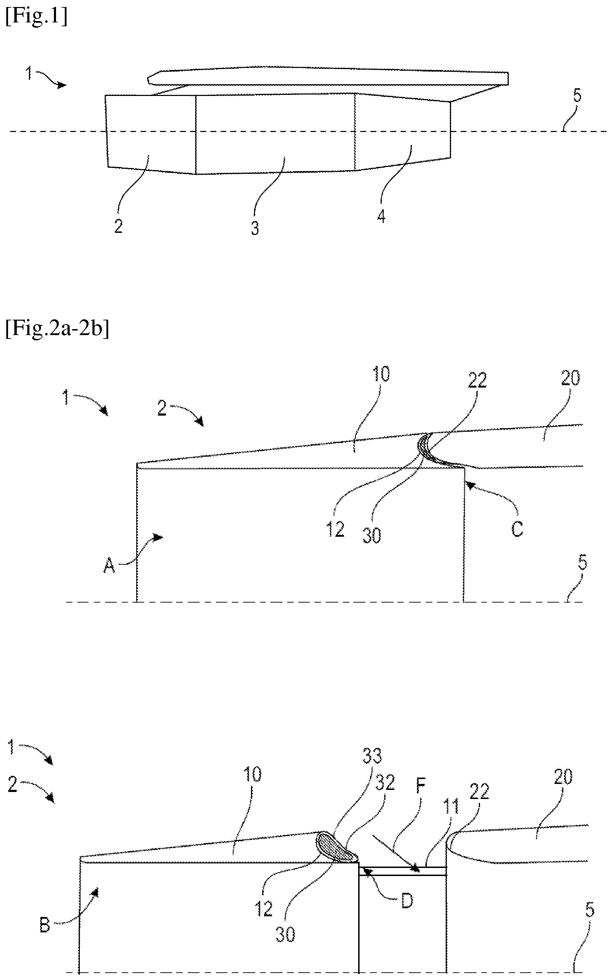

Comme illustré sur la figure 1, un ensemble propulsif 1 pour un aéronef comporte un générateur de gaz 3 présentant un axe longitudinal 5. L'ensemble propulsif est fixé ici en position latérale à une voilure de l'aéronef mais pourrait être fixé à une position différente.

Le générateur de gaz 3 comporte au moins un compresseur, une chambre de combustion et au moins une turbine (non représentés) agencés les uns derrière les autres le long dudit axe 5. Également, un inverseur 4 ou un capot arrière est disposé coaxialement en aval du générateur de gaz 3.

L'ensemble propulsif 1 comporte également une entrée d'air 2 de forme générale tubulaire disposée, par exemple coaxialement, en amont du générateur de gaz 3.

Sauf précision contraire, les adjectifs intérieur/interne et extérieur/externe sont utilisés en référence à une direction radiale de sorte que la partie intérieure (i.e. radialement intérieure) d'un élément est plus proche de l'axe 5 que la partie extérieure (i.e. radialement extérieure) du même élément.

Comme illustré sur les figures 2a, 2b, cette entrée d'air 2 comporte une lèvre annulaire 10 amont et une partie fixe 20 aval, appelée ici reste de l'entrée d'air, en aval de la lèvre annulaire 10. La lèvre annulaire 10 comprend un bord aval 12, ayant notamment une hauteur d'environ 80mm à 100mm. Le reste de l'entrée d'air 20 comprend un bord amont 22. La lèvre annulaire 10 est mobile en translation axiale le long de l'axe 5. La translation est réalisée par des barres de translation 11 mises en mouvement par exemple par un système d'actionneur (non représenté). L'entrée d'air 2 se translate ainsi entre une position reculée A et une position avancée B. En position reculée A, le bord aval 12 de la lèvre annulaire 10 est accolé au bord amont 22 du reste de l'entrée d'air 20. En position avancée B, le bord aval 12 de la lèvre annulaire 10 est espacé du bord amont 22 du reste de l'entrée d'air 20 de sorte qu'un passage F d'entrée d'air dans l'ensemble propulsif est libéré.

L'ensemble propulsif 1 comporte en outre un système d'étanchéité 30 de forme générale annulaire qui est porté par la lèvre annulaire 10, au niveau de son bord aval 12. Le système d'étanchéité 30 est représenté de manière très schématique sur les figures 2a et 2b et est illustré de manière plus détaillée sur les figures suivantes.

Le système d'étanchéité 30 est configuré pour adopter, dans la position reculée A, un état restreint C dans lequel il assure une étanchéité entre le bord aval 12 de la lèvre 10 et le bord amont 22 du reste de l'entrée d'air 20. Dans son état restreint C, le système d'étanchéité 30 selon l'invention permet à la ligne extérieure de l'entrée d'air de rester lisse de sorte que l'écoulement de l'air à l'extérieur de l'entrée d'air n'est pas perturbé.

Le système d'étanchéité 30 est en outre configuré pour adopter, dans la position avancée B, un état déployé D dans lequel il définit au niveau du bord aval 12 un profil aérodynamique d'écoulement d'air entrant à l'intérieur du générateur de gaz 3. Dans son état déployé C, le système d'étanchéité 30 selon l'invention permet ainsi de créer un profil aérodynamique permettant un bon écoulement laminaire de l'air entrant dans l'ensemble propulsif.

Le système d'étanchéité 30 peut être en multicouches et de matériaux variés, notamment en polymère (silicone ou autre) renforcé (support métallique ou tissu technique de fibres) et contenant une couche anti-usure.

Le système d'étanchéité 30 peut être de section axiale variable en cas d'un contour variable de l'entrée d'air. Le système d'étanchéité 30 peut être continue de sorte qu'il forme un anneau ou découpé en plusieurs secteurs éclissés les uns aux autres, par exemple par des embouts. Le système d'étanchéité 30 peut avoir des trous d'évacuation d'air (évents).

Le système d'étanchéité 30 comprend une enveloppe annulaire 32 qui s'étend autour de l'axe 5 et au niveau du bord aval 12 de la lèvre 10. Cette enveloppe 32 comporte une surface annulaire aval 33 configurée pour venir en appui sur le bord amont 22 du reste de l'entrée d'air 20 en position reculée A. L'enveloppe 32 et en particulier sa surface annulaire aval 33, définit par ailleurs le profil aérodynamique d'écoulement d'air entrant à l'intérieur du générateur de gaz 3 en position avancée B de la lèvre annulaire 10.

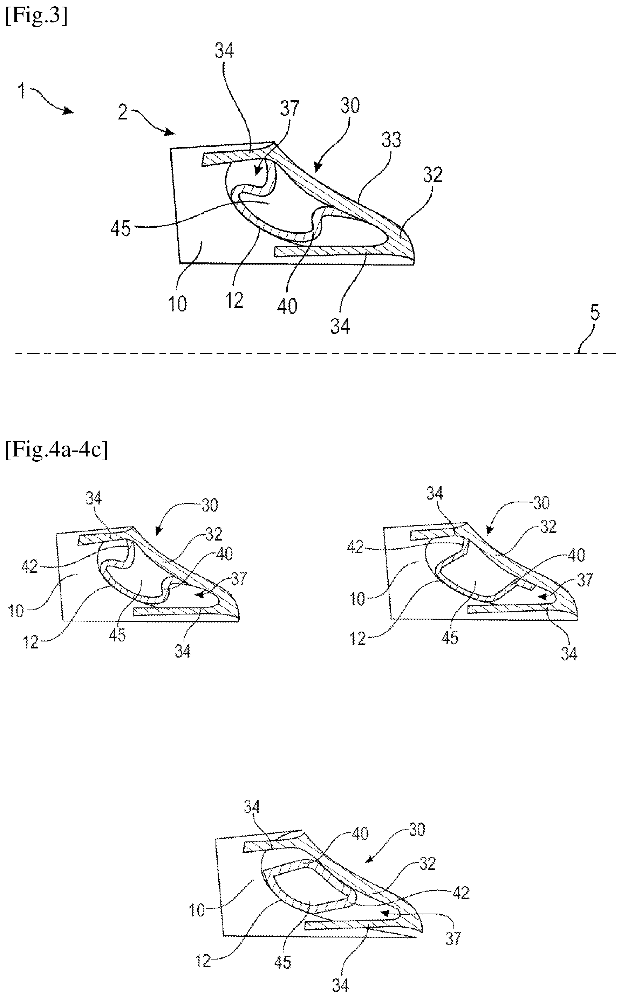

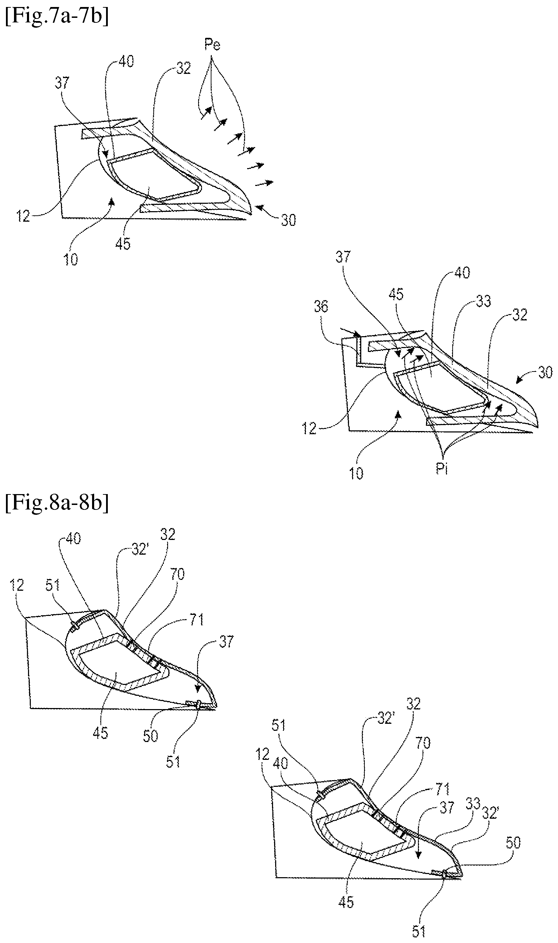

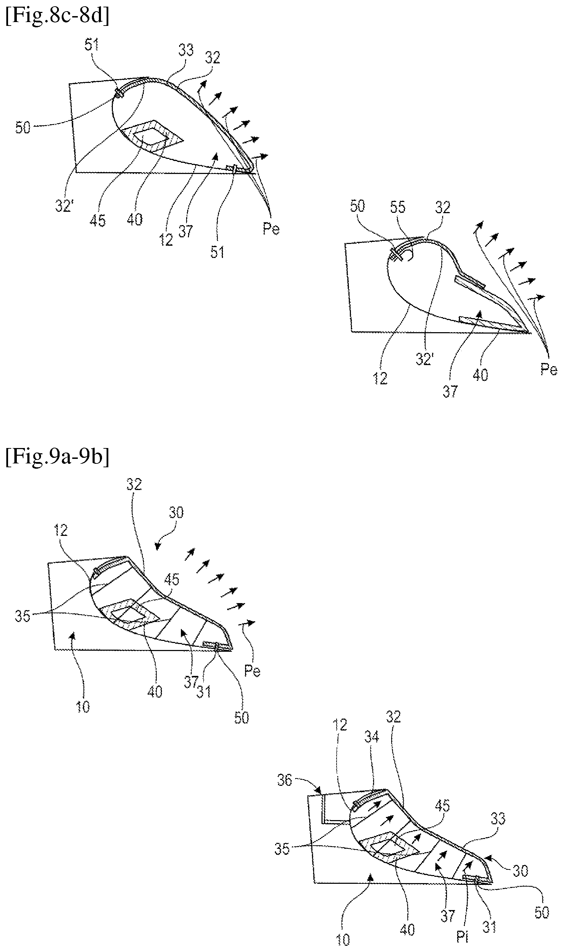

Dans les exemples illustrés aux figures 3 à 7, l'enveloppe 32 est réalisée dans un matériau élastiquement déformable. Dans les exemples illustrés sur les figures 8 à 9, l'enveloppe 32 est réalisée dans un tissu technique 32'.

Selon un mode de réalisation, on remarque que l'enveloppe 32 a en section axiale notamment une forme générale en C et comprend deux rebords cylindriques 34 de fixation ou de liaison au bord aval 12 de la lèvre 10. Les rebords cylindrique 34 forment les extrémités de la forme en C.

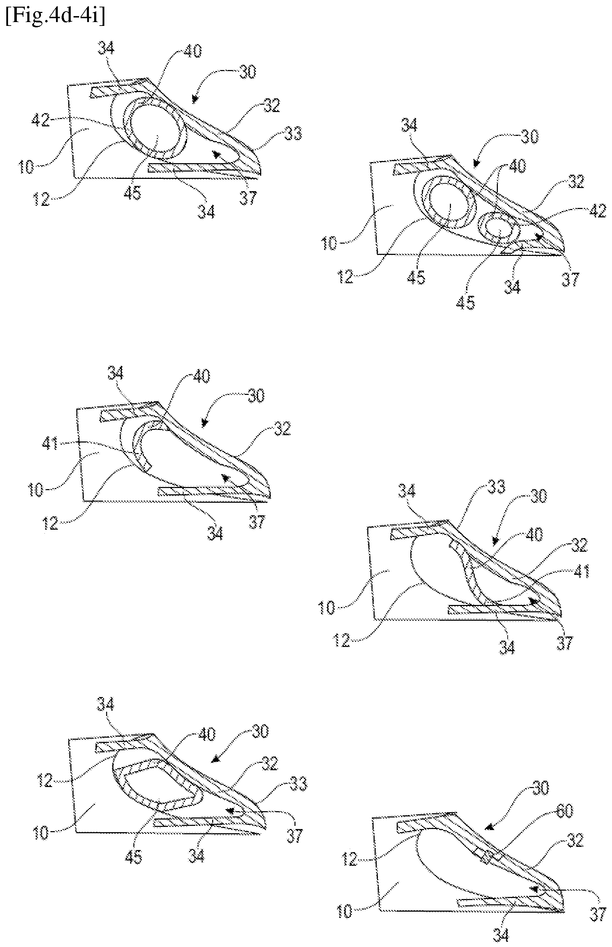

Selon une variante de réalisation (figures 4i et 8d), l'enveloppe 32 a en section axiale par exemple une forme en L et comprend un rebord cylindrique 34 de fixation ou de liaison au bord aval 12 de la lèvre 10.

Le système d'étanchéité 30 comprend en outre au moins un organe élastiquement déformable 40 situé au niveau du bord aval 12 de la lèvre 10. Plus précisément, l'organe 40 est par exemple logé dans un espace annulaire 37 défini entre l'enveloppe 32 et le bord aval 12 de la lèvre 10. L'organe 40 est configuré pour être déformé élastiquement par compression lorsque la lèvre 10 est dans sa position reculée A. Lorsque la lèvre annulaire 10 passe de sa position reculée A à sa position avancée B, l'organe 40 est configuré pour exercer une force de rappel élastique sur l'enveloppe 32, de façon à ce que le système d'étanchéité 30 adopte l'état déployé D précité de manière autonome.

L'organe 40 et l'enveloppe 32 sont de préférence distincts. L'organe 40 et l'enveloppe 32 sont en particulier constitués de matériaux différents.

L'organe 40 est par exemple un joint annulaire 42 en matériau élastiquement déformable, ce joint 42 comportant une cavité annulaire interne 45 (figures 4a à 4d notamment). L'organe 40 présente notamment une section axiale en forme d'oméga avec talon (figures 4a et 4b), en forme de trapèze ou de losange (figure 4c), en forme circulaire (figure 4d) ou double circulaire (figure 4e).

L'organe 40 peut alternativement être une patte annulaire 41 en matériau élastiquement déformable (figures 4f et 4g notamment). La patte 41 peut par exemple prendre la forme d'un C (figure 4f) ou d'un K avec talons (figure 4g).

L'organe 40 est par exemple intimement lié à l'enveloppe 32 et peut s'étendre au moins en partie dans un prolongement de celle-ci (figure 4i). Dans ce cas, le système d'étanchéité 30 comprend par exemple un moyen de fixation 60 de l'organe 40 sur l'enveloppe 32. Tel qu'illustré sur cette figure, l'organe 40 peut être situé à l'extérieure de l'enveloppe 32. Alternativement, le positionnement de l'organe 40 et de l'enveloppe pourrait être inversé de sorte que l'enveloppe 32 se trouverait à l'extérieur de l'organe 40.

L'organe 40 a en outre par exemple en section axiale une forme générale en L, C, Ω, V, S, K ou O lui permettant notamment de se rétractée en position reculée A et d'exercer une force de rappel élastique sur l'enveloppe 32 en position avancée B de la lèvre annulaire 10.

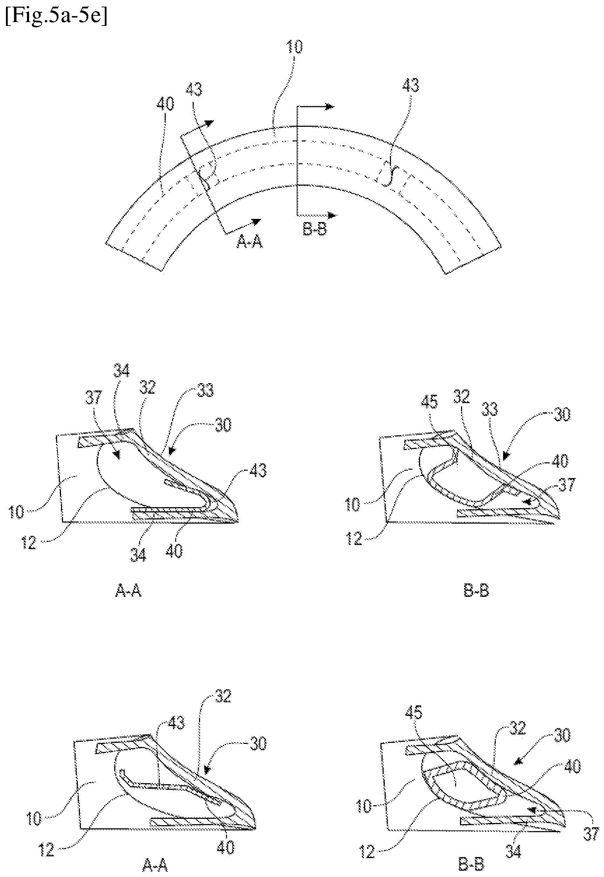

Comme représenté sur les figures 5a à 5g, l'organe 40 peut comprendre au moins un ressort 43 de rappel, par exemple métallique. Le ressort 43 permet notamment d'augmenter la force de rappel permettant au système d'étanchéité 30 de passer de la position rétractée à la position déployée. Le système d'étanchéité 30 comprend ici plusieurs ressorts 43 répartis à différents intervalles de la circonférence autour de l'axe 5 sur le bord aval 12 de la lèvre 10, comme illustré sur la figure 5a.

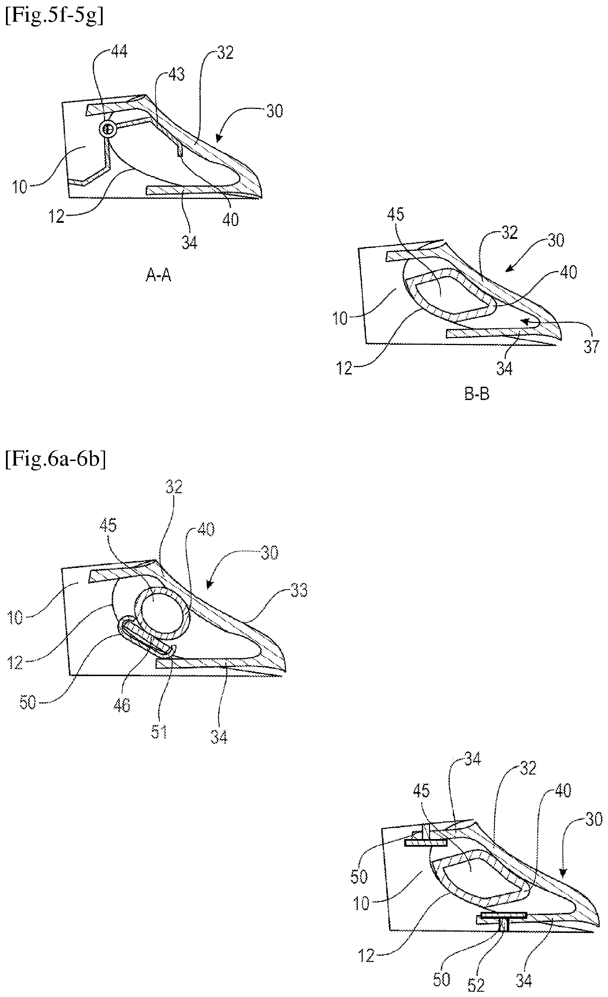

Les ressorts 43 peuvent être combinés avec des joints annulaires 42 et/ou des pattes annulaires 41, comme illustrés sur les figures 5c, 5e, 5g (coupe selon le plan de coupe B-B de la figure 5a).

Les ressorts 43 sont ainsi placés le long de la circonférence du bord aval 12, soit en alternance avec des pattes annulaires 41 et/ou des joints annulaires 42 (tel qu'illustré), soit en parallèle avec des pattes annulaires 41 et/ou des joints annulaires 42.

Par exemple, le ressort 43 peut être une lame flexible en U (Figure 5b) ou en S (Figure 5d). Il peut aussi être un ressort 43 de torsion avec levier (Figure 5f). L'organe 40 comprend dans ce dernier cas un pivot 44 autour duquel le ressort 43 de tension avec levier pivote.

Comme représenté sur les figures 6a, 6b, au moins un des éléments choisit parmi l'enveloppe 32 et l'organe 40 est fixé par au moins un moyen de fixation 50 à l'entrée d'air mobile.

Le moyen de fixation 50 peut comprendre notamment une agrafe 51, appelée également support-joint en « C » (figure 6a). L'agrafe 51 permet en particulier de fixer une base 46 de l'organe 40 à la lèvre annulaire 10.

Le moyen de fixation 50 peut également comprendre une pince 52, appelée également fixation avec joint en sandwich (figure 6b). Dance ce derniers, cas, la pince 52 permet de fixer les rebords cylindriques 34 de l'enveloppe 32 à la lèvre annulaire 10.

Comme illustré sur la figure 7a, une pression externe négative Pe (par exemple engendrée par aspiration d'air par l'ensemble propulsif) va aider l'enveloppe 32 à reprendre sa forme aérodynamique de façon naturelle lors du passage de la position reculée A à la position avancée B.

Si la pression externe Pe n'est pas toujours négative ou n'est pas suffisante dans tous les cas de vol, une pressurisation interne Pi peut être utilisée. Dans ce cas, et comme illustré sur la figure 7b, un système d'étanchéité 30 gonflable peut être utilisé. L'air peut être prélevé de l'air externe, de l'air interne à l'entrée d'air 2 si la pression P est positive et suffisante ou de l'air interne à l'ensemble propulsif. En effet, l'espace 37 peut éventuellement être relié à l'atmosphère externe ou interne à l'entrée d'air par au moins une canalisation 36 de pressurisation. La pression interne Pi est ainsi renforcée et permet à l'enveloppe 32 de reprendre sa forme aérodynamique. Si la pression externe ou interne à l'entrée d'air ne n'est pas suffisante, l'air peut également être prélevé depuis un autre endroit de l'ensemble propulsif et conduit via un tube d'alimentation jusque dans l'espace 37.

Le débit d'air peut être maitrisé et la canalisation 36 peut être obturée lors de la rétraction des barres de translation (référencées 11 sur la figure 2b).

Comme représentée sur les figures 8a, 8b, 8c, 8d, l'enveloppe 32 peut être réalisée dans un tissu technique 32'. Ce tissu technique 32', notamment une toile résistante, peut être fait de différentes matières ou de matières composées, notamment en Kevlar, en verre. Ce tissu technique 32' permet d'assurer la forme aérodynamique en position avancée B et l'organe 40 permet d'assurer l'étanchéité aérodynamique en position reculée A.

L'enveloppe 32 en tissu technique peut être fixée à l'organe 40 par un moyen d'attache 70, notamment des pions de cisaillement intégrés 71 (figures 8a, 8b et 8d). L'enveloppe 32 en tissu technique est ici fixée à la lèvre 10 par l'intermédiaire d'agrafe 51 mais pourrait également être cousue au bord aval 12 de la lèvre 10.

Alternativement, l'enveloppe 32 en tissu technique peut ne pas être attachée à l'organe 40 (figure 8c).

Comme représentée sur la figure 8a, l'enveloppe 32 en tissu technique peut être en une seule partie. Alternativement, et comme représentée sur la figure 8b, l'enveloppe 32 en tissu technique peut être en deux parties. Une première partie interne de l'enveloppe 32 est alors fixée à une deuxième partie externe de l'enveloppe 32.

L'enveloppe 32 peut prolonger l'organe 40 (figure 8d) qui prend ici la forme d'un L. Cette disposition permet une continuité de l'enveloppe 32 et de l'organe 40. L'enveloppe 32 se trouve alors une position externe par rapport à l'organe 40.

L'enveloppe 32 en tissu technique peut être prise en sandwich entre une tôle arrondie 55 et la lèvre annulaire 10. La tôle arrondie 55 facilite le passage de l'enveloppe 32 de l'état rétracté à l'état déployé.

Comme c'est le cas pour une enveloppe en matériau déformable élastiquement, et comme illustrée sur les figures 9a et 9b, la pression externe négative Pe (par exemple engendrée par aspiration d'air par le moteur) va aider l'enveloppe 32 en tissu technique à se gonfler et se tendre de façon naturelle comme un parachute. Dans le cas où cette pression externe engendre une trop grande déformation de l'enveloppe 32 en tissu technique, cette dernière peut être reliée par une multitude de fils 35 au bord aval 12 de la lèvre 10. Ces fils 35 sont destinés à être tendus lorsque l'enveloppe 32 est dans son état déployé. Ces fils 35 permettent ainsi de maintenir le tissu technique dans la forme déployée souhaitée.

Si la pression externe Pe n'est pas toujours négative ou est insuffisante, une pressurisation interne Pi peut être utilisée. Dans ce cas, et comme illustré sur la figure 9b, le système d'étanchéité 30 gonflable peut être utilisé. L'air peut être prélevé de l'air externe ou interne à l'entrée d'air 2 si la pression est positive et suffisante. En effet, l'espace 37 peut éventuellement être relié à l'atmosphère externe ou interne à l'entrée d'air par au moins une canalisation 36 de pressurisation. La pression interne Pi est ainsi renforcée et permet à l'enveloppe 32 de reprendre sa forme aérodynamique. Si la pression externe ou interne à l'entrée d'air ne n'est pas suffisante, l'air peut également être prélevé depuis un autre endroit de l'ensemble propulsif et conduit via un tube d'alimentation jusque dans l'espace 37. Le débit d'air peut être maitrisé et la canalisation 36 obturée lors de la rétraction des barres de translation (référencées 11 sur la figure 2b).

Les différents modes de réalisation de l'organe 40 et de l'enveloppe 32 présentés peuvent être utilisés indifféremment avec l'enveloppe 32 en matériau déformable élastiquement et avec l'enveloppe 32 en tissu technique.

Ainsi toutes les configurations présentées ci-dessus de l'organe 40 et/ou de l'enveloppe 32 peuvent être combinées entre elles pour faire un système d'étanchéité 30 selon l'invention. L'invention offre ainsi une flexibilité de configuration grâce à la multitude d'options de forme, d'attache et d'agencement de l'enveloppe 32 et/ou de l'organe 40.

L'invention est applicable à tous les aéronefs et moteurs ayant une entrée d'air à géométrie variable.

## Revendications

1. Ensemble propulsif (1) pour un aéronef, cet ensemble propulsif (1) comportant :
- un générateur de gaz (3) présentant un axe longitudinal (5) et comportant au moins un compresseur, une chambre de combustion et au moins une turbine agencés les uns derrière les autres le long dudit axe (5), et
- une entrée d'air (2) de forme générale tubulaire disposée en amont du générateur de gaz (3) par référence à l'écoulement des gaz en fonctionnement, cette entrée d'air (2) comportant une lèvre annulaire (10) amont qui est mobile en translation axiale le long dudit axe (5) depuis une position reculée (A) dans laquelle elle comprend un bord aval (12) accolé à un bord amont (22) du reste de l'entrée d'air (20), et une position avancée (B) dans laquelle son bord aval (12) est espacé du bord amont (22) du reste de l'entrée d'air (20), et
- un système d'étanchéité (30) de forme générale annulaire qui est porté par la lèvre (10), au niveau de son bord aval (12), et qui est configuré pour adopter, dans ladite position reculée (A), un état restreint (C) dans lequel il assure une étanchéité entre le bord aval (12) de la lèvre (10) et le bord amont (22) du reste de l'entrée d'air (20), et un état déployé (D) dans lequel il définit au niveau dudit bord aval (12) un profil aérodynamique d'écoulement d'air à l'intérieur du générateur de gaz (3),
**caractérisé en ce que** le système d'étanchéité (30) comprend :
- une enveloppe annulaire (32) réalisée dans un premier matériau et s'étendant autour de l'axe (5) et au niveau du bord aval (12) de la lèvre (10), cette enveloppe (32) comportant une surface annulaire (33) aval configurée pour venir en appui sur le bord amont (22) du reste de l'entrée d'air (20) et pour définir ledit profil aérodynamique, et
- au moins un organe (40) réalisé dans un second matériau différent du premier matériau et élastiquement déformable, cet organe étant situé au niveau du bord aval (12) de la lèvre (10) et configuré pour être déformé élastiquement par compression lorsque la lèvre (10) est dans sa position reculée (A) et pour exercer une force de rappel élastique sur l'enveloppe (32) lorsque la lèvre (10) passe de sa position reculée (A) à sa position avancée (B), de façon à ce que le système d'étanchéité (30) adopte l'état déployé (D) précité de manière autonome.

2. Ensemble propulsif (1) selon la revendication 1, dans lequel ledit premier matériau est un matériau élastiquement déformable ou un tissu technique (32').

3. Ensemble propulsif (1) selon la revendication 1 ou 2, dans lequel l'enveloppe (32) a en section axiale une forme générale en L ou C et comprend au moins un rebord cylindrique de fixation (34) ou de liaison au bord aval (12) de la lèvre (10).

4. Ensemble propulsif (1) selon l'une des revendications précédentes, dans lequel l'organe (40) est choisi parmi :
- une patte annulaire (41) en matériau élastiquement déformable,
- un joint annulaire (42) en matériau élastiquement déformable, ce joint comportant une cavité annulaire interne (45), et
- un ressort (43), par exemple métallique.

5. Ensemble propulsif (1) selon la revendication précédente, dans lequel il comprend plusieurs ressorts (43) répartis autour de l'axe (5) sur le bord aval (12) de la lèvre (10).

6. Ensemble propulsif (1) selon l'une des revendications précédentes, dans lequel l'organe (40) est logé dans un espace annulaire (37) défini entre l'enveloppe (32) et le bord aval (12) de la lèvre (10).

7. Ensemble propulsif (1) selon l'une des revendications 1 à 5, dans lequel l'organe (40) est intimement lié à l'enveloppe (32) et s'étend au moins en partie dans un prolongement de celle-ci.

8. Ensemble propulsif (1) selon l'une des revendications précédentes, dans lequel au moins un des éléments choisit parmi l'enveloppe (32) et l'organe (40) est fixé par au moins une agrafe, une pince, ou par couture au bord aval (12) de la lèvre (10).

9. Ensemble propulsif (1) selon l'une des revendications précédentes, dans lequel l'enveloppe (32) est reliée par une multitude de fils (35) au bord aval (12) de la lèvre (10), ces fils (35) étant destinés à être tendus lorsque l'enveloppe (32) est dans sa position déployée (D).

10. Ensemble propulsif (1) selon la revendication précédente, dans lequel l'espace (37) est relié à l'atmosphère par au moins une canalisation de pressurisation (36).

11. Ensemble propulsif (1) selon l'une des revendications précédentes, dans lequel l'organe (40) a en section axiale une forme générale en L, C, Ω, V, S, K ou O.

## Patentansprüche

1. Antriebsanordnung (1) für ein Flugzeug, wobei diese Antriebsanordnung (1) Folgendes umfasst:
- einen Gasgenerator (3), der eine Längsachse (5) aufweist und mindestens einen Verdichter, eine Brennkammer und mindestens eine Turbine umfasst, die entlang der Achse (5) hintereinander angeordnet sind, und
- einen allgemein rohrförmigen Lufteinlass (2), der in Bezug auf die Gasströmung im Betrieb stromaufwärts des Gasgenerators (3) angeordnet ist, wobei dieser Lufteinlass (2) eine stromaufwärtige ringförmige Lippe (10) umfasst, die entlang der Achse (5) ausgehend von einer zurückgezogenen Position (A), in der sie eine stromabwärtige Kante (12) umfasst, die an einer stromaufwärtigen Kante (22) des Restes des Lufteinlasses (20) angrenzt, und einer vorgeschobenen Position (B), in der ihre stromabwärtige Kante (12) von der stromaufwärtigen Kante (22) des Restes des Lufteinlasses (20) beabstandet ist, axial verschiebbar ist, und
- ein allgemein ringförmiges Dichtungssystem (30), das von der Lippe (10) an ihrer stromabwärtigen Kante (12) getragen wird und das konfiguriert ist, um in der zurückgezogenen Position (A) einen eingeschränkten Zustand (C), in dem es eine Abdichtung zwischen der stromabwärtigen Kante (12) der Lippe (10) und der stromaufwärtigen Kante (22) des Restes des Lufteinlasses (20) sicherstellt, und einen ausgebreiteten Zustand (D) anzunehmen, in dem es an der stromabwärtigen Kante (12) ein aerodynamisches Luftströmungsprofil im Inneren des Gasgenerators (3) definiert, **dadurch gekennzeichnet, dass** das Dichtungssystem (30) Folgendes umfasst:
- eine ringförmige Hülle (32), die aus einem ersten Material hergestellt ist und sich um die Achse (5) und an der stromabwärtigen Kante (12) der Lippe (10) erstreckt, wobei diese Hülle (32) eine stromabwärtige ringförmige Oberfläche (33) umfasst, die konfiguriert ist, um an der stromaufwärtigen Kante (22) des Restes des Lufteinlasses (20) aufzuliegen und um das aerodynamische Profil zu definieren, und
- mindestens ein Teil (40), das aus einem zweiten Material hergestellt ist, das sich von dem ersten Material unterscheidet und elastisch verformbar ist, wobei sich dieses Teil an der stromabwärtigen Kante (12) der Lippe (10) befindet und konfiguriert ist, um durch Verdichtung elastisch verformt zu werden, wenn die Lippe (10) in ihrer zurückgezogenen Position (A) ist, und um eine elastische Rückstellkraft auf die Hülle (32) auszuüben, wenn die Lippe (10) von ihrer zurückgezogenen Position (A) in ihre vorgeschobene Position (B) übergeht, sodass das Dichtungssystem (30) den oben genannten ausgebreiteten Zustand (D) auf autonome Weise einnimmt.

2. Antriebsanordnung (1) nach Anspruch 1, wobei das erste Material ein elastisch verformbares Material oder ein technisches Gewebe (32') ist.

3. Antriebsanordnung (1) nach Anspruch 1 oder 2, wobei die Hülle (32) im axialen Querschnitt eine allgemein L- oder C-förmige Form aufweist und mindestens einen zylindrischen Befestigungsrand (34) oder Verbindungsrand an der stromabwärtigen Kante (12) der Lippe (10) umfasst.

4. Antriebsanordnung (1) nach einem der vorstehenden Ansprüche, wobei das Teil (40) ausgewählt ist aus:
einem ringförmigen Schenkel (41) aus elastisch verformbarem Material,
- einem ringförmigen Gelenk (42) aus elastisch verformbarem Material, wobei dieses Gelenk einen inneren ringförmigen Hohlraum (45) umfasst, und
- einer Feder (43), beispielsweise aus Metall.

5. Antriebsanordnung (1) nach dem vorstehenden Anspruch, wobei sie mehrere Federn (43) umfasst, die an der stromabwärtigen Kante (12) der Lippe (10) um die Achse (5) verteilt sind.

6. Antriebsanordnung (1) nach einem der vorstehenden Ansprüche, wobei das Teil (40) in einem ringförmigen Raum (37) aufgenommen ist, der zwischen der Hülle (32) und der stromabwärtigen Kante (12) der Lippe (10) definiert ist.

7. Antriebsanordnung (1) nach einem der Ansprüche 1 bis 5, wobei das Teil (40) eng mit der Hülle (32) verbunden ist und sich mindestens teilweise in einer Verlängerung dieser erstreckt.

8. Antriebsanordnung (1) nach einem der vorstehenden Ansprüche, wobei mindestens eines der Elemente, ausgewählt aus der Hülle (32) und dem Teil (40), über mindestens eine Klammer, eine Klemme oder über eine Naht an der stromabwärtigen Kante (12) der Lippe (10) befestigt ist.

9. Antriebsanordnung (1) nach einem der vorstehenden Ansprüche, wobei die Hülle (32) über eine Vielzahl von Kabeln (35) mit der stromabwärtigen Kante (12) der Lippe (10) verbunden ist, wobei diese Kabel (35) dazu vorgesehen sind, gespannt zu werden, wenn die Hülle (32) in ihrer ausgebreiteten Position (D) ist.

10. Antriebsanordnung (1) nach dem vorstehenden Anspruch, wobei der Raum (37) über mindestens eine Druckleitung (36) mit der Atmosphäre verbunden ist.

11. Antriebsanordnung (1) nach einem der vorstehenden Ansprüche, wobei das Teil im axialen Querschnitt eine allgemeine L-, C-, Ω-, V-, S-, K- oder O-förmige Form aufweist.

## Claims

1. A propulsion unit (1) for an aircraft, this propulsion unit (1) comprising:
- a gas generator (3) having a longitudinal axis (5) and comprising at least one compressor, a combustion chamber and at least one turbine arranged one behind the other along said axis (5), and
- an air intake (2) of generally tubular shape disposed upstream of the gas generator (3) with reference to the flowing of the gases during operation, this air intake (2) comprising an upstream annular lip (10) which is movable in axial translation along said axis (5) from a rearward position (A) in which it comprises a downstream edge (12) adjoining an upstream edge (22) of the rest of the air intake (20), and an forward position (B) in which its downstream edge (12) is spaced from the upstream edge (22) of the rest of the air intake (20), and
- a generally annular sealing system (30) which is carried by the lip (10) at the level of its downstream edge (12) and which is configured to adopt, in said rearward position (A) a restricted state (C) in which it ensures a sealing between the downstream edge (12) of the lip (10) and the upstream edge (22) of the rest of the air intake (20), and an extended state (D) in which it defines, at the level of said downstream edge (12), an aerodynamic airflow profile inside the gas generator (3),
**characterised in that** the sealing system (30) comprises:
- an annular envelope (32) made of a first material and extending around the axis (5) and at the level of the downstream edge (12) of the lip (10), this envelope (32) comprising a downstream annular surface (33) configured to bear on the upstream edge (22) of the rest of the air intake (20) and to define said aerodynamic profile, and
- at least one member (40) made of a second material different from the first material and elastically deformable, this member being located at the level of the downstream edge (12) of the lip (10) and configured to be elastically deformed by compression when the lip (10) is in its rearward position (A) and to exert an elastic return force on the envelope (32) when the lip (10) passes from its rearward position (A) to its forward position (B), so that the sealing system (30) adopts the aforementioned extended state (D) autonomously.

2. The propulsion unit (1) according to claim 1, wherein said first material is an elastically deformable material or a technical fabric (32').

3. The propulsion unit (1) according to claim 1 or 2, wherein the envelope (32) is generally L or C shaped in axial cross-section and comprises at least one cylindrical rim (34) for attaching or connecting to the downstream edge (12) of the lip (10).

4. The propulsion unit (1) according to one of the preceding claims, wherein the member (40) is selected from:
- an annular leg (41) made of elastically deformable material,
- an annular seal (42) of elastically deformable material, this seal comprising an internal annular cavity (45), and
- a spring (43), for example metallic.

5. The propulsion unit (1) according to the preceding claim, wherein it comprises a plurality of springs (43) distributed around the axis (5) on the downstream edge (12) of the lip (10).

6. The propulsion unit (1) according to any of the preceding claims, wherein the member (40) is housed in an annular space (37) defined between the envelope (32) and the downstream edge (12) of the lip (10).

7. The propulsion unit (1) according to any of claims 1 to 5, wherein the member (40) is intimately connected to the envelope (32) and extends at least partly in an extension thereof.

8. The propulsion unit (1) according to any of the preceding claims, wherein at least one of the elements selected from the envelope (32) and the member (40) is attached by at least one clip, one clamp, or seam to the downstream edge (12) of the lip (10).

9. The propulsion unit (1) according to any of the preceding claims, wherein the envelope (32) is connected by a plurality of wires (35) to the downstream edge (12) of the lip (10), these wires (35) being intended to be tensioned when the envelope (32) is in its extended position (D).

10. The propulsion unit (1) according to the preceding claim, wherein the space (37) is connected to the atmosphere by at least one pressurisation pipe (36).

11. The propulsion unit (1) according to any of the preceding claims, wherein the member (40) is generally L, C, Ω, V, S, K or O shaped in axial cross-section.
